Europäisches Patentamt

European Patent Office

Office européen des brevets

(19)

(11) Veröffentlichungsnummer: **0 220 521
B1**

(12) **EUROPÄISCHE PATENTSCHRIFT**

(45) Veröffentlichungstag der Patentschrift:
**23.05.90**

(51) Int. Cl.⁵: **G01N 31/22**

(21) Anmeldenummer: **86113454.2**

(22) Anmeldetag: **01.10.86**

(54) Kolorimetrisches Gasdosimeter.

(30) Priorität: **01.10.85 DE 3534934**

(43) Veröffentlichungstag der Anmeldung:
**06.05.87 Patentblatt 87/19**

(45) Bekanntmachung des Hinweises auf die Patenterteilung:
**23.05.90 Patentblatt 90/21**

(84) Benannte Vertragsstaaten:
**DE FR GB NL**

(56) Entgegenhaltungen:
**CH-A- 583 019
DE-B- 1 498 909
DE-U- 1 710 385
GB-A- 2 034 725
GB-A- 2 129 933
US-A- 3 388 975**

(73) Patentinhaber: **Drägerwerk Aktiengesellschaft,
Moislinger Allee 53-55, D-2400 Lübeck 1(DE)**

(72) Erfinder: **Pannwitz, Karl-Heinz, Dipl.-Ing.,
Krempelsdorfer Allee 51h, D-2400 Lübeck(DE)**

ACTORUM AG

## Beschreibung

Die Erfindung betrifft ein kolorimetrisches Gasdosimeter, welches in einem geschlossenen, durchsichtigen, einseitig zu öffnenden Hohlkörper, der in mehrere entlang seiner Längsachse verlaufende Kammern unterteilt ist, eine körnige Indikatorsubstanz in mindestens einer dieser Kammern enthält.

Ein derartiges Gasdosimeter ist in der DE-OS 14 98 909 beschrieben. Das bekannte Dosimeter ist ein mit einem körnigen Indikatormaterial gefülltes Glasröhrchen, welches an einer Seite geöffnet werden kann, so daß von hier Gas in den Innenraum des Glasröhrchens eindiffundiert und der nachzuweisende Schadstoff eine Verfärbung des Indikatormaterials bewirkt. Mit fortdauernder Diffusion des Schadstoffes in das Indikatormaterial schreitet die Verfärbungszone entlang des Dosimeterröhrchens fort. Die Anzeigeempfindlichkeit der bekannten Gasdosimeter hängt im wesentlichen von dem Verhältnis des effektiven Diffusionsquerschnittes zu der Querschnittsfläche der Indikatorschicht ab. Geringe Mengen an nachzuweisenden gasförmigen Schadstoffen führen bei fortschreitender Verfärbungszone zu einer schwächeren Verfärbung des noch unverfärbten Indikators. Der Grund hierfür ist darin zu sehen, daß die an der Öffnung in den Indikator eindringenden Schadstoffmoleküle eine immer länger werdende Verfärbungszone durchschreiten müssen, bevor sie an die Grenzschicht des Indikators zwischen verfärbter und unverfärbter Zone gelangen, um dort mit dem Indikator eine chemische Verfärbungsreaktion einzugehen. Während des Durchschreitens der schon verfärbten Indikatorzone werden die neu in das Gasdosimeter eindiffundierenden Schadstoffmoleküle durch die Packung des körnigen verbrauchten Indikatormerials in ihrer Diffusion zur unverfärbten Indikatorschicht behindert. Der Diffusionsquerschnitt für die in die Öffnung neu eintretenden Schadstoffmoleküle ist dadurch erheblich verringert. Für niedrigere Schadstoffkonzentrationen sind daher die bekannten Gasdosimeter nicht geeignet, um eine frühzeitige Erkennung von schädlichen Dosen zu ermöglichen, da die in den ersten Schichten angebotene Indikatormenge die eindiffundierenden Schadstoffmoleküle schon innerhalb im Vergleich zur Gesamtlänge des Indikators unbedeutenden Länge chemisorbiert, so daß die entstandene Verfärbungszone einer quantitativen Auswertung nicht zugänglich ist.

Der vorliegenden Erfindung liegt somit die Aufgabe zugrunde, ein kolorimetrisches Gasdosimeter der genannten Art so auszubilden, daß der Diffusionsquerschnitt für die nachzuweisenden Schadstoffmoleküle unabhängig von dem Grade der Verfärbung der Indikatorsubstanz ist und die Nachweisempfindlichkeit somit erhöht wird.

Die Lösung der Aufgabe erfolgt dadurch, daß die Kammern nebeneinander entlang der Längsachse des Hohlkörpers verlaufen und daß entlang der mindestens einen indikatorgefüllten Kammer eine indikatorfreie Kammer als Diffusionsraum angrenzt, wobei indikatorgefüllte und indikatorfreie Kammer durch eine gasdurchlässige Trennwand abgeteilt sind.

Ein derartiges Gasdosimeter besitzt den Vorteil, daß nunmehr die die Anzeigegeschwindigkeit bestimmende Diffusionsstrecke räumlich getrennt von der Indikatorsubstanz und deren Verfärbungszone verläuft. Wird das geöffnete Gasdosimeter der den Schadstoff enthaltenden Atmosphäre ausgesetzt, diffundiert der Schadstoff in die Indikator-freie Kammer und tritt von dort durch die gasdurchlässige Trennwand in den Indikator ein. Zu Beginn der Exposition wird die Indikatorsubstanz am Anfang der Diffusionsstrecke verfärbt, da infolge des vorherrschenden Konzentrationsgefälles an nachzuweisenden Schadstoffmolekülen deren Adsorption an der körnigen Indikatorsubstanz von Anbeginn an erfolgt. Mit fortschreitender Verfärbung wird die Adsorption der Schadstoffmoleküle an der unverfärbten Indikatorsubstanz zu einer ebenso deutlich abgegrenzten Verfärbungszone führen, wie dies zu Beginn der Exposition der Fall ist. Das Konzentrationsgefälle zwischen der schadstoffhaltigen Umgebungsluft und der nicht verfärbten Indikatorsubstanz führt innerhalb der Indikator-freien Kammer zu einer Diffusion der Schadstoffmoleküle, die unbehindert von der körnigen, schon verfärbten Indikatorsubstanz stattfindet. Für eine gegebene Menge an Schadstoffmolekülen wird eine geringere Menge an Indikatorsubstanz zur Verfügung gestellt als bei den bekannten Prüfröhrchen. Somit wird eine wesentliche Erhöhung des effektiven Diffusionsquerschnittes erzielt, der zu einer höheren Nachweisempfindlichkeit führt.

Die gasdurchlässige Trennwand kann zweckmäßigerweise aus einem Drahtgewebe oder Papierfasergewebe oder anderem geeigneten Kunststoffgewebe bestehen, welche gegenüber dem nachzuweisenden Schadstoff und den verwendeten Reagenzien inert sind und den körnigen Indikator in seiner Kammer zurückhalten. Gleichermaßen lassen sich auch entsprechende Polyethylen-Kunststoffgewebe oder -Folien sowie -Filterpapiere oder Glasfasergewebe einsetzen.

Vorzugsweise besteht der Hohlkörper aus einem Glasröhrchen, in welchem konzentrisch und in räumlichem Abstand die Trennwand angeordnet ist. Die Indikator-freie Kammer ist dabei entweder zentrisch in dem Hohlkörper oder in der von Trennwand und Hohlkörper begrenzten Ringkammer angeordnet. Die Verfärbungszone des Indikators kann dann allseitig an dem Gasdosimeter abgelesen werden. Es sind jedoch je nach Erfordernis auch verschiedenartige andere geometrische Anordnungen von Indikator-freier und Indikator-gefüllter Kammer denkbar.

Eine besonders günstige Anordnung besteht darin, mehrere Kammern mit unterschiedlichen, für den Nachweis verschiedener Schadstoffe geeigneten Indikatorsubstanzen zu füllen. Da jede der Kammern mit einer Trennwand von einer Indikator-freien Kammer abgeteilt ist, besitzen die unterschiedlichen Schadstoffmoleküle gleichermaßen einen Diffusionsquerschnitt, welcher von den ihnen zuzuordnenden Indikatorsubstanzen unbeeinflußt ist.

Im folgenden wird ein Ausführungsbeispiel des Gasdosimeters anhand der Zeichnung dargestellt und näher erläutert. Es zeigen:

Figur 1 ein Gasdosimeter im Schnitt
Figur 2 ein Gasdosimeter mit mehreren Indikatorgefüllten Kammern

Ein als Glasröhrchen 1 ausgebildeter Hohlkörper besitzt in seinem Inneren eine im Querschnitt kreisringförmig angeordnete, mit der porösen Indikatorsubstanz gefüllte Kammer 2, welche sich an die Wand des Glasröhrchens 1 anlegt. Die Kammer 2 ist über eine gasdurchlässige Trennwand 3 von der inneren, Indikator-freien Kammer 4 abgeteilt. Der Zutritt für das nachzuweisende Gas in die Indikatorfreie Kammer erfolgt über die einzige Öffnung 5 des Glasröhrchens 1. Die beiden Kammern 2, 4 sind durch ein Halteelement 6 in ihrer Lage fixiert.

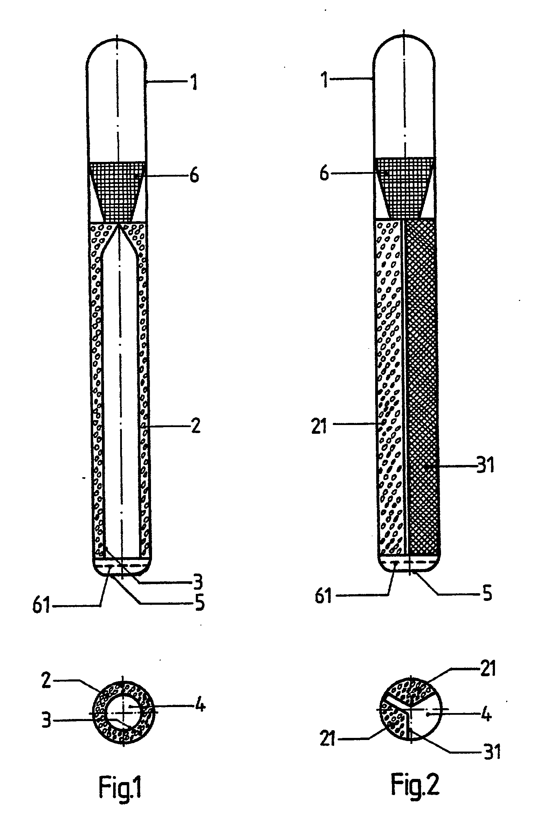

Das in Figur 2 dargestellte Glasröhrchen 1 besitzt zwei benachbarte, jeweils mit unterschiedlicher Indikatorsubstanz gefüllte Kammern 21. Diese beiden Kammern 21 sind durch die Trennwand 31 untereinander und von der Indikator-freien Kammer 4 abgeteilt, durch welche über die Öffnung 5 die Schadstoffmoleküle zu den jeweiligen zu verfärbenden Indikatorsubstanzen hineindiffundieren. Die mit Indikatorsubstanz gefüllten Kammern 21 und die Indikator-freie Kammer 4 sind durch das Halteelement 6 und durch das gasdurchlässige Halteelement 61 in ihrer Lage fixiert.

## Patentansprüche

1. Kolorimetrisches Gasdosimeter, welches in einem geschlossenen, durchsichtigen, einseitig zu öffnenden Hohlkörper, der in mehrere entlang seiner Längsachse verlaufende Kammern unterteilt ist, eine körnige Indikatorsubstanz in mindestens einer dieser Kammern enthält, dadurch gekennzeichnet, daß die Kammern (2, 4, 21) nebeneinander entlang der Längsachse des Hohlkörpers (1) verlaufen und daß entlang der mindestens einen indikatorgefüllten Kammer (2) eine indikatorfreie Kammer (4) als Diffusionsraum angrenzt, wobei indikatorgefüllte (2) und indikatorfreie (4) Kammer durch eine gasdurchlässige Trennwand (3, 31) abgeteilt sind.

2. Kolorimetrisches Gasdosimeter nach Anspruch 1, dadurch gekennzeichnet, daß die Trennwand aus einem Drahtgewebe (3) besteht.

3. Kolorimetrisches Gasdosimeter nach Anspruch 1, dadurch gekennzeichnet, daß der Hohlkörper aus einem Glasröhrchen (1) besteht, in welchem konzentrisch und in räumlichem Abstand die Trennwand (3) angeordnet ist.

4. Kolorimetrisches Gasdosimeter nach Anspruch 1, dadurch gekennzeichnet, daß mehrere Kammern (2, 21) mit unterschiedlichen, für den Nachweis verschiedener Schadstoffe geeigneten Indikatorsubstanzen gefüllt sind.

## Claims

1. Colorimetric gas dosimeter containing, in a closed, transparent hollow body which can be opened on one side and is divided into several chambers extending along its longitudinal axis, a granular indicator substance in at least one of these chambers, characterised in that the chambers (2, 4, 21) extend side by side along the longitudinal axis of the hollow body (1), and in that a chamber (4) without indicator borders, as a diffusion space, at least one (2) of the chambers filled with indicator, the chamber (2) filled with indicator and the chamber (4) without indicator being divided by a partition wall (3, 31) which is permeable to gas.

2. Colorimetric gas dosimeter according to claim 1, characterised in that the partition wall consists of a wire gauze (3).

3. Colorimetric gas dosimeter according to claim 1, characterised in that the hollow body consists of a glass tube (1) in which the partition wall (3) is arranged concentrically and spatially distanced.

4. Colorimetric gas dosimeter according to claim 1, characterised in that several chambers (2, 21) are filled with different indicator substances suitable for the detection of various harmful substances.

## Revendications

1. Dosimètre de gaz colorimétrique, qui contient, dans un corps creux fermé et transparent, à ouvrir d'un côté, qui est divisé en plusieurs chambres s'étendant le long de son axe longitudinal, une substance indicatrice granuleuse dans au moins une de ces chambres, caractérisé en ce que les chambres (2, 4, 21) s'étendent les unes à côté des autres le long de l'axe longitudinal du corps creux (1), et en ce qu'une chambre (4) dépourvue d'indicateur, servant d'espace de diffusion, est limitrophe longitudinalement de la ou des chambres (2) remplies d'indicateur, la chambre remplie d'indicateur (2) et la chambre dépourvue d'indicateur (4) étant séparées l'une de l'autre par une paroi séparatrice (3, 31) perméable au gaz.

2. Dosimètre de gaz colorimétrique selon la revendication 1, caractérisé en ce que la paroi séparatrice est constituée par un tissu en fil métallique (3).

3. Dosimètre de gaz colorimétrique selon la revendication 1, caractérisé en ce que le corps creux est constitué par un tube à essai en verre (1), dans lequel est disposée, concentriquement et à distance dans l'espace, la paroi séparatrice (3).

4. Dosimètre de gaz colorimétrique selon la revendication 1, caractérisé en ce que plusieurs chambres (2, 21) sont remplies de substances indicatrices différentes, convenant pour le décèlement de différentes substances nocives.

Fig.1

Fig.2